**Europäisches Patentamt**

**European Patent Office**

**Office européen des brevets**

(11) Veröffentlichungsnummer: **0 402 562**
**A1**

# EUROPÄISCHE PATENTANMELDUNG

(21) Anmeldenummer: **90100675.9**

(22) Anmeldetag: **13.01.90**

(51) Int. Cl.⁵: **F16B 5/06, F16B 12/20, F16B 2/24**

(30) Priorität: **13.06.89 CH 2223/89**

(43) Veröffentlichungstag der Anmeldung:
**19.12.90 Patentblatt 90/51**

(84) Benannte Vertragsstaaten:
**AT BE CH DE DK ES FR GB GR IT LI LU NL SE**

(71) Anmelder: **HEMAIR AG**
**Kaltenboden**
**CH-8834 Schindellegi(CH)**

(72) Erfinder: **Johnsson, Lars**
**St. Gallerstrasse 31**
**CH-8853 Lachen(CH)**

(74) Vertreter: **EGLI-EUROPEAN PATENT**
**ATTORNEYS**
**Horneggstrasse 4**
**CH-8008 Zürich(CH)**

(54) **Vorrichtung zur Befestigung von Wand- und/oder Bodenplatten an einer Gehäusestruktur.**

(57) Die Erfindung bezieht sich auf eine Vorrichtung zur lösbaren Befestigung von einsetz- und bei Bedarf wieder entfernbaren Wand- oder Bodenplatten in einen aus Längs- und Querträgern sowie Vertikalstützen gebildeten Grundrahmen, beispielsweise in einen als Gehäusestruktur ausgebildeten Grundrahmen zur Aufnahme von Funktions-Aggregaten der Klimatechnik.

Bei dieser Vorrichtung werden die einzelnen Wand- oder Bodenplatten (20 bis 25) an mindestens einer Seite, vorzugsweise an zwei gegenüberliegenden Seiten durch mindestens je ein, mit einem ersten und einem zweiten Federarmteil (35,40) versehenen Klemmelement (30) in dem Grundrahmen (10) gehalten. Das im wesentlichen mit dem Profilkörper (1) der entsprechenden Träger oder Stützen und der eingesetzten Wand- oder Bodenplatte verspannte Klemmelement (30) hält dabei mit dem klauenartigen ersten Federarmteil (35) die Wand- oder Bodenplatte und ist mit dem zweiten Federarmteil (40) am Profilkörper (1) auslenkbar arretiert.

FIG. 1

FIG. 2

## Vorrichtung zur Befestigung von Wand- und/oder Bodenplatten an einer Gehäusestruktur

Die Erfindung bezieht sich auf eine Vorrichtung zur lösbaren Befestigung von Wand- und/oder Bodenplatten an einer Gehäusestruktur, insbesondere an einer zur Aufnahme von Funktions-Aggregaten der Klimatechnik ausgebildeten Gehäusestruktur, bei welcher der Grundrahmen im wesentlichen aus entsprechend als Profilkörper ausgebildeten, an den Ecken miteinander verbundenen Längs- und Querträgern sowie Vertikalstützen gebildet ist.

Bei bekannten Gehäusestrukturen, insbesondere zur Aufnahme von Funktions-Aggregaten der Klimatechnik, werden die seitlichen sowie oberen und unteren Abdeckplatten im wesentlichen in einen Grundrahmen abdichtend eingesetzt. Mittels entsprechender Schliesswerkzeuge werden anschliessend in den Abdeckplatten eingebaute Verschlusselemente durch eine Dreh- oder Schwenkbewegung mit entsprechend in den einzelnen Trägern des Grundrahmens angeordneten Ausnehmungen oder dergleichen in Eingriff gebracht und miteinander verriegelt. Der konstruktive Aufbau der einzelnen Verschlussvorrichtung ist relativ kompliziert und kostenaufwendig.

Der Erfindung liegt daher die Aufgabe zugrunde, eine Vorrichtung zu schaffen, mittels welcher, ohne besondere an den Abdeckplatten sowie Trägern des Grundrahmens angeordnete Verschlusselemente, eine gesicherte und bei Bedarf ohne spezielle Hilfsmittel lösbare Befestigung der Abdeckplatten in dem Grundrahmen einer Gehäusestruktur erreicht wird.

Erfindungsgemäss wird diese Aufgabe dadurch gelöst, dass zwischen der einzelnen, in den Grundrahmen eingesetzten Wand-oder Bodenplatte und dem entsprechend zugeordneten Profilkörper der Längs- und/oder Querträger sowie der Vertikalstützen an mindestens einer Seite, oder an zwei gegenüberliegenden Seiten mindestens je ein Klemmelement angeordnet ist, welches mit einem ersten die zugewandte Plattenseite klauenartig haltenden Federarmteil und mit einem zweiten am Profilkörper arretier- und auslenkbaren Federarmteil versehen und durch die Rückstellkraft der beiden Federarmteile mit dem jeweiligen Längs- oder Querträger oder der Vertikalstützen verspannt ist.

Weitere Merkmale der Erfindung ergeben sich aus der folgenden Beschreibung in Verbindung mit der Zeichnung und den einzelnen Patentansprüchen.

Ein Ausführungsbeispiel des Erfindungsgegenstandes wird nachstehend in Verbindung mit der Zeichnung beschrieben. Es zeigt:

Fig .1 ein in perspektivischer Ansicht dargestelltes und aus einem Gehäuserahmen mit eingesetzten Platten gebildetes Gehäuse zur Aufnahme von Aggregaten,

Fig. 2 ein in Schnittansicht dargestelltes Teilstück des Gehäuses gemäss Fig. 1,

Fig.3 einen in Ansicht dargestellten Ausschnitt des Gehäuses gemäss Pfeilrichtung A in Fig. 2,

Fig.4 einen in Fig.2 durch einen Kreis B bezeichneten und als Sprengzeichnung dargestellten Ausschnitt des Gehäuses,

Fig.5 ein perspektivisch dargestelltes Klemmelement für die Befestigung der Platten in dem Rahmen des Gehäuses,

Fig.6 das in Seitenansicht dargestellte Klemmelement gemäss Fig.5,

Fig.7 das in Ansicht dargestellte Klemmelement,

Fig.8 das gemäss Pfeilrichtung X in Fig .6 in Draufsicht dargestellte Klemmelement, und

Fig.9 das gemäss Pfeilrichtung X' in Fig.6 in Draufsicht dargestellte Klemmelement.

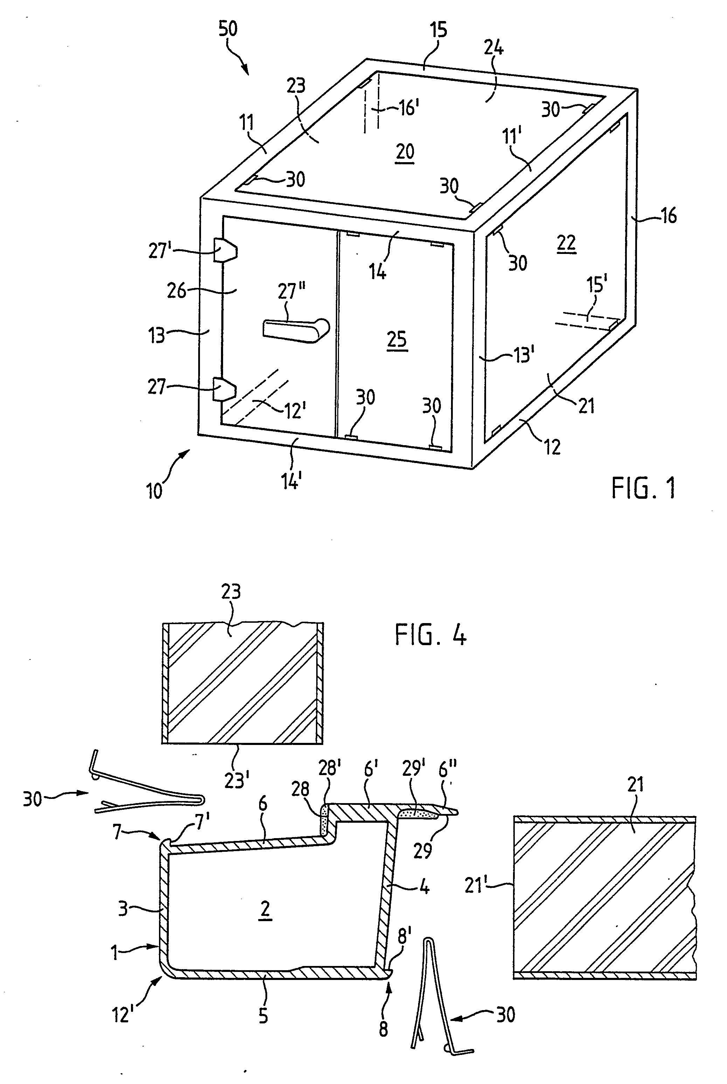

Fig.1 zeigt ein in perspektivischer Ansicht dargestelltes und beispielsweise als quaderförmiger Hohlkörper ausgebildetes Gehäuse zur Aufnahme von Funktions-Aggregaten, insbesondere von nicht näher dargestellten Komponenten der Klimatechnik, wie zum Beispiel Luftfiltern, Wärmeaustauschern, Heiz- und Kühlorganen, Ventilatoren und Schalldämpfern und dergleichen.

Das in seiner Gesamtheit mit 50 bezeichnete Gehäuse umfasst im wesentlichen einen Grundrahmen 10 sowie entsprechend in den Grundrahmen 10 abdichtend einsetz- und bei Bedarf wieder entfernbare Wand- oder Bodenplatten 20,21,22,23 und 24. An der nicht näher bezeichneten Stirnseite ist das Gehäuse 50 beispielsweise mit einer mittels Scharniere 27 und 27' schwenkbar am Grundrahmen 10 angeordneten und mit einem Griff 28 versehenen Tür 26 sowie einer einsetz- und wieder entfernbaren Stirnplatte 25 verschlossen.

Der Grundrahmen 10 hat in parallelem Abstand zueinander, in horizontaler Ebene angeordnete Längsträger 11,11' und 12, 12' und Querträger 14,14' und 15,15' sowie Vertikalstützen 13,13' und 16,16'. Die Längsträger 11,11' und 12,12' sowie Querträger 14,14' und 15,15' sind mit den an den Ecken ent sprechend angeordneten Vertikalstützen 13,13' und 16,16' in nicht näher dargestellter Weise, zum Beispiel durch eine Schweissverbindung oder dergleichen miteinander verbunden.

Die einzelnen, vorstehend genannten und im wesentlichen als Kastenprofil ausgebildeten Längs- und Querträger sowie Vertikalstützen bilden zusammmen den als eine Baueinheit ausgebildeten Grundrahmen 10, in welchen die horizontalen Bodenplatten 20 und 21, die vertikalen Wandplatten 22 und 23, die vertikale Rückwand 24 sowie das Teilstück der vertikalen Vorderwand 25 einsetzbar sind.

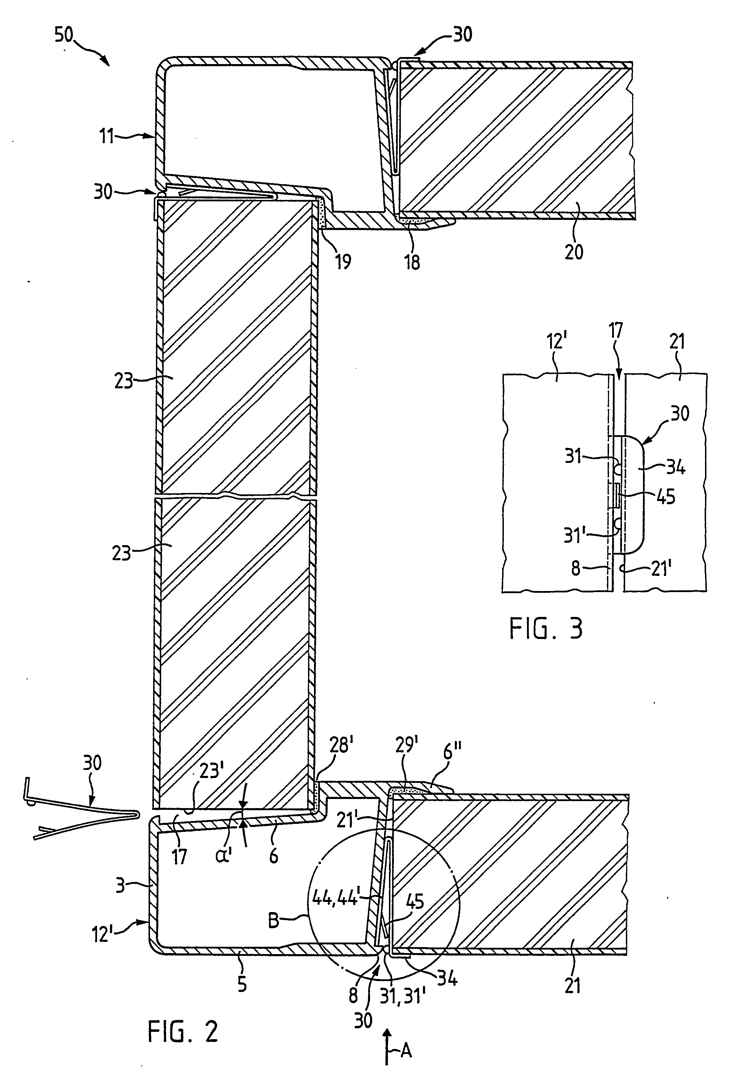

Fig.2 zeigt ein in Schnittansicht dargestelltes Teilstück des Gehäuses 50 und man erkennt den oberen Längsträger 11 mit der eingesetzten, oberen Bodenplatte 20 und den unteren Längsträger 12' mit der eingesetzten, unteren Bodenplatte 21 sowie die zwischen den beiden Längsträgern 11 und 12' eingesetzte Wandplatte 23.

Zwischen der einzelnen Platte 20,21 und 23 sowie den entsprechend zugeordneten Längsträgern 11,12' ist jeweils ein im wesentlichen keilförmig ausgebildeter Spalt 17 (nur im unteren Bereich bezeichnet) vorgesehen. Der keilförmige Spalt 17 zwischen der Wand 6 des Längsträgers 12' und der zugeordneten Seite 23' der Platte 23 hat einen in der Grössenordnung von etwa 5° bis 20° liegenden Winkel α'.

In den Spalt 17 sind, wie in Fig.2 dargestellt, einerseits mit den Längsträgern und andererseits mit den Platten in Wirkverbindung stehende, federelastisch wirkende Klemmelemente 30 eingesetzt. Zwischen den anderen, hier nicht dargestellten Längs- und Querträgern sowie Vertikalstützen und den zugeordneten Platten ist ebenfalls ein, an diesen Stellen nicht bezeichneter Spalt 17 für Klemmelemente vorgesehen.

Die Platten 20,21 und 23 werden, wie in Fig.2 dargestellt, von dem einzelnen in den Spalt 17 eingesetzten Klemmelement 30 am jeweiligen Träger des Grundrahmens 10 gehalten. Die Halterung der in Fig.2 nicht dargestellten Platten 22,24 und 25 ist analog ausgebildet und erfolgt mittels weiterer Klemmelemente (Fig.1). An dieser Stelle sei darauf hingewiesen, dass an mindestens einer Seite, vorzugsweise aber an zwei gegenüberliegenden Seiten in den zwischen dem Träger oder der Stütze sowie der Platte vorgesehenen Spalt 17 mindestens ein Klemmelement 30 angeordnet oder eingesetzt ist. Bei Verwendung von nur einem Klemmelement 30 für die einzelne Platte ist diese, in nicht näher dargestellter Weise, auf der dem Klemmelement gegenüberliegenden Seite am jeweiligen Träger abgestützt.

An den Längs- und Querträgern sowie an den Vertikalstützen sind, wie in Fig.2 teilweise dargestellt, entsprechende und sich über die gesamte Länge der Längs- und Querträger sowie Vertikalstützen erstreckende Dichtungen 18',19' und 28' ,29' vorgesehen und derart angeordnet, dass die Platten 20,21,23 sowie die hier nicht dargestellten Platten 22,24 und 25 abdichtend zwischen den Trägern und Stützen des Grundrahmens 10 (Fig. 1) angeordnet sind.

Die klippartige Einrastung der Klemmelemente 30 zwischen den Platten 20 bis 25 und den einzelnen Trägern oder Stützen bewirkt, dass die Platten 20 bis 25 abgedichtet eine mit dem Grundrahmen 10 in sich geschlossene Gehäuse-Baueinheit bilden.

Fig.3 zeigt einen in Ansicht gemäss Pfeilrichtung A in Fig.2 dargestellten Ausschnitt und man erkennt die mit dem Spalt 17 im Abstand zum unteren Längsträger 12' angeordnete und durch das Klemmelement 30 gehaltene untere Bodenplatte 21.

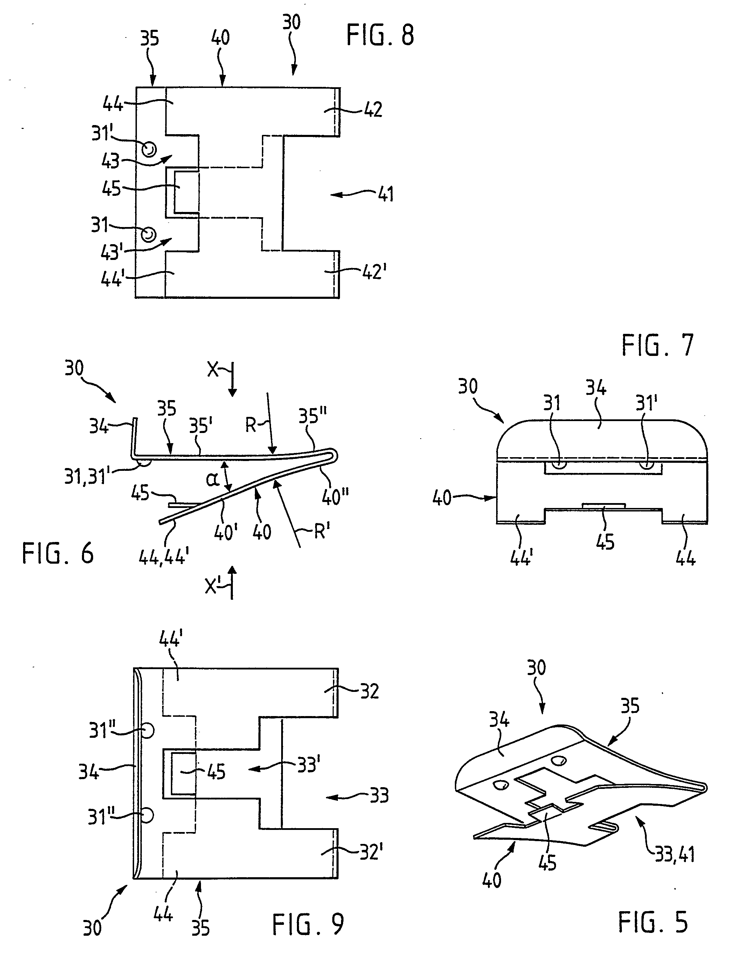

In Fig.4 ist als Sprengzeichnung das in Fig.2 durch einen Kreis B bezeichnete untere Teilstück des Gehäuses 50 dargestellt und man erkennt den im Profilquerschnitt dargestellten Profilkörper 1 des Längsträgers 12', die im Abstand dazu angeordneten Platten 23 und 21 sowie entsprechend zugeordnete Klemmelemente 30.

Der mit einem Hohlraum 2 versehene Profilkörper 1 hat eine Seitenwand 3, eine der Bodenplatte 21 zugewandte erste Innenwand 4, eine Aussenwand 5 sowie eine der Wandplatte 23 zugewandte zweite Innenwand 6.

Die Seitenwand 3 und die angeformte Aussenwand 5 bilden einen rechten Winkel, wobei die im Abstand zu der Seitenwand 3 angeordnete erste Innenwand 4 vorzugsweise in bezug zur Seitenwand 3 geneigt an der Aussenwand 5 und die im Abstand zu der Aussenwand 5 angeordnete zweite Innenwand 6 vorzugsweise in bezug zu der Aussenwand 5 geneigt an der Seitenwand 3 angeformt ist.

Die Neigung der der Seite 21' der einen Platte 21 zugewandten Innenwand 4 sowie die Neigung der der Seite 23' der anderen Platte 23 zugewandten Innenwand 6 ist jeweils so gewählt, dass zwischen den einzelnen Teilen 4 und 21' sowie 6 und 23' der, wie in Fig.2 dargestellt, keilförmige Spalt 17 zum federelastischen Einsetzen des Klemmelements 30 entsteht. Die Wände 4 und 6 können auch, in nicht dargestellter Weise, ohne Neigung, dass heisst, parallel zu den korrespondierenden Wänden 3 und 5 angeordnet sein. Ein entsprechender Spalt zwischen den Teilen 4,21' sowie 6,23' zum Einschieben des Klemmelements muss jedoch vorhanden sein.

Im Eckbereich der Seitenwand 3 und der Innenwand 6 sowie im Eckbereich der Aussenwand 5 und der Innenwand 4 ist jeweils ein nasenartig ausgebildeter Anschlag 7 mit Anschlagkante 7' beziehungsweise ein Anschlag 8 mit Anschlagkante 8' vorgesehen. Weiterhin ist die zweite Innenwand 6 vorzugsweise mit einem ersten Absatz 6', welcher eine Anlagekante 28 für die Platte 23 bildet sowie einem zweiten, nasenartig ausgebildeten Absatz 6'' versehen, welcher eine Anlagekante 29 für die Bodenplatte 21 bildet und in zusammengebautem Zustand (Fig. 2) über die Bodenplatte 21 greift.

Das in den Figuren 5 bis 9 näher dargestellte Klemmelement 30 wird nachstehend im einzelnen beschrieben:

Fig .5 zeigt das perspektivisch dargestellte Klemmelement 30, welches im wesentlichen ein erstes mit einem abgewinkelt angeordneten Anschlagteil 34 versehenes Federarmteil 35 sowie ein daran angeformtes zweites Federarmteil 40 umfasst. In den Federarmteilen 35,40 sind zur Erreichung einer elastischen Federwirkung entsprechend ausgebildete Ausnehmungen 33,41 vorgesehen. Das Klemmelement 30 ist aus aus geeignetem, vorzugsweise rostfreien Federstahl hergestellt.

In Fig.6 ist das Klemmelement 30 in Seitenansicht und in Fig.7 in Ansicht dargestellt und man erkennt das mit dem Anschlagteil 34 versehene erste Federarmteil 35 sowie das einmal haarnadelförmig umgebogen daran angeformte zweite Federarmteil 40. Im vorderen Bereich des ersten Federarmteils 35 sind zwei im Abstand zueinander angeordnete und in Richtung des zweiten Federarmteils 40 orientierte Nocken 31,31' vorgesehen. Die Nocken 31,31' sind in dem ersten Federarmteil 35 eingepresst, so dass auf der gegenüberliegenden Seite (Fig.9) jeweils eine mit 31'' bezeichnete Vertiefung entsteht. Das zweite Federarmteil 40 ist unter einem Winkel α in der Grössenordnung von 5° bis 30° in bezug zu dem ersten Federarmteil 35 umgebogen. Im vorderen Bereich des zweiten Federarmteils 40 ist eine in Richtung des ersten Federarmteils 35 abgebogene und etwa parallel zum ersten Federarmteil 35 angeordnete Lasche 45 vorgesehen.

Bei einem bevorzugsten Ausführungsbeispiel hat zur Erreichung einer bestimmten Feder- Vorspannung des Klemmelements 30 das erste Federarmteil 35 ein rechtwinklig am Anschlagteil 34 angeformtes Teilstück 35' und ein in bezug zu dem Teilstück 35' leicht nach oben abgebogenes Teilstück 35''. An dem Teilstück 35'' ist mit einem etwa parallel dazu verlaufenden Teilstück 40'' das zweite Federarmteil 40 angeformt, welches mit einem Teilstück 40' unter dem in der Grössenordnung von etwa 5° bis 30° liegenden Winkel α in bezug zu dem Teilstück 35' des Federarmteils 35 abgebogen ist. Die Länge der Teilstücke 35' und 40' entspricht etwa dem zweifachen Mass der Länge der Teilstücke 35'' und 40''. Der Übergang der Teilstück 35' ,40' zu den Teilstücken 35'' ,40'' wird vorzugsweise durch einen relativ grossen Radius R,R' gebildet.

Fig.8 zeigt im wesentlichen das gemäss Pfeilrichtung X' (Fig. 6) in Drauf sicht dargestellte zweite Federarmteil 40 des Klemmelements 30, welches im Bereich der haarnadelförmigen Umbiegung durch die Ausnehmung 41 in zwei Schenkel 42,42' unterteilt ist. Im vorderen Bereich ist die durch zwei Ausnehmungen 43,43' begrenzte Lasche 45 angeordnet. Zu beiden Seiten der Ausnehmungen 43 und 43' sind zwei Verriegelungsarme 44,44' vorgesehen.

Fig.9 zeigt im wesentlichen das gemäss Pfeilrichtung X (Fig. 6) in Draufsicht dargestellte erste Federarmteil 35 mit der im Bereich der haarnadelförmigen Umbiegung zwischen zwei Schenkel 32,32' angeordneten Ausnehmung 33, an welche sich eine bis etwa zum Anschlag 34 reichende zweite, abgesetzt ausgebildete Ausnehmung 33' anschliesst. Weiterhin erkennt man die unmittelbar am Anschlag 34 angrenzenden Vertiefungen 31'' der beiden Nocken 31,31'.

Beim Eindrücken des Klemmelements 30 in den zwischen dem Profilkörper 1 des jeweiligen Trägers und der zugeordneten Platte gebildeten Spalt 17 stützt sich das erste Federarmteil 35 an der Kante 21' der im wesentlichen durch den Anschlag 34 gehaltenen Platte 21 ab, während die beiden Verriegelungsarme 44 und 44' federelastisch hinter den nasenartig ausgebildeten Anschlag 8 (Fig.2) des Profilkörpers 1 einrasten und mit der Anschlagkante 8' derart in Eingriff stehen, dass ein unbeabsichtigtes Herausrutschen des Klemmelements 30 aus dem Spalt 17 nicht möglich ist. In dieser Einbaustellung stützen sich die beiden Nocken 31,31' am Anschlag 8 ab, so dass zwischen der Kante 21' der Platte 21 und dem Anschlag 8 des Trägers ein gleichmässiger Spalt 17 (Fig.3) entsteht.

Wie in Fig.1 schematische dargestellt, sind an jeder Seite zur Halterung der Platten im Grundrahmen 10 an jeder Seite vorzugsweise mindestens zwei im Abstand zueinander angeordnete Klemmelemente 30 vorgesehen.

Zum Entfernen des einzelnen Klemmelements 30 und somit zum Ausbau der Platten aus dem Grundrahmen 10, wird durch einfaches Einschieben eines Schraubenziehers oder dergleichen zwischen die beiden Nocken 31,31' die Lasche 45 in Richtung des ersten Federarmteils 35 bewegt, wodurch die Verriegelungsarme 44,44' ausser Eingriff der Anschlagkante 8' gelangen und somit das einzelne Klemmelement 30 aus dem Spalt 17 entfernt werden kann.

An dieser Stelle sei darauf hingewiesen, dass das einzelne Klemmelement 30 in nicht näher dargestellter Weise an der jeweiligen Seite der Wand- oder Bodenplatte 20 bis 25 angeordnet und befestigt sein kann, so dass bei der Demontage die einzelne Wand- oder Bodenplatte zusammen mit dem daran befestigten Klemmelement aus dem Grundrahmen 10 erfernbar ist.

**Ansprüche**

1. Vorrichtung zur lösbaren Befestigung von Wand- und/oder Bodenplatten (22,23,24,25 und 20,21) an einem Grundrahmen (10) einer Gehäusestruktur, insbesondere an einer zur Aufnahme von Funktions-Aggregaten der Klimatechnik ausgebildeten Gehäusestruktur, bei welcher der Grundrahmen (10) im wesentlichen aus entsprechend als Profilkörper (1) ausgebildeten, an den Ecken miteinander verbundenen Längs- und Querträgern (11,11';12,12' und 14,14';15,15') sowie Vertikalstützen (13,13';16,16') besteht, dadurch gekennzeichnet, dass zwischen der einzelnen in den Grundrahmen (10) eingesetzten Wand- oder Bodenplatte (20,21,22,23,24,25) und dem entsprechend zugeordneten Profilkörper (1) der Längs- und/oder Querträger (11,11';12,12' und 14,14',15,15') sowie der Vertikalstützen (13,13';16,16') an mindestens einer Seite, oder an zwei gegenüberliegenden Seiten mindestens je ein Klemmelement (30) angeordnet ist, welches mit einem ersten die zugewandte Plattenseite klauenartig haltenden Federarmteil (35) und mit einem zweiten am Profilkörper (1) arretier- und auslenkbaren Federarmteil (40) versehen und durch die Rückstellkraft der beiden Federarmteile (35,40) mit dem jeweiligen Längs- oder Querträger oder der Vertikalstützen des Grundrahmens (10) verspannt ist.

2. Vorrichtung nach Anspruch 1, dadurch gekennzeichnet, dass das Klemmelement (30) zur Bildung der beiden Federarmteile (35,40) einmal haarnadelförmig umgebogen ist, wobei an dem ersten Federarmteil (35) ein im wesentlichen rechtwinklig abgebogenes Anschlagteil (34) zur Halterung der jeweiligen Wand- oder Bodenplatte (20,21,22,23,24,25) und an dem in bezug zum ersten Federarmteil (35) unter einem Winkel (α) abgebogenen zweiten Federarmteil (40) zwei mit dem Profilkörper (1) in Eingriff bringbare Verriegelungsarme (44,44') sowie eine in bezug dazu abgebogene und im wesentlichen parallel zum ersten Federarmteil (35) orientierte Lasche (45) angeordnet ist.

3. Vorrichtung nach Anspruch 2, dadurch gekennzeichnet, dass das zweite Federarmteil (40) des Klemmelements (30) in bezug zu dem ersten Federarmteil (35) unter einem in der Grössenordnung von 5° bis 30° liegenden Winkel (u) abgebogen ist.

4. Vorrichtung nach Anspruch 1 bis 3, dadurch gekennzeichnet, dass das erste Federarmteil (35) des Klemmelements (30) an der dem zweiten Federarmteil (40) zugewandten Seite mit zwei im Abstand zueinander angeordneten Nocken (31,31') versehen ist, durch welche zum Einführen eines mit der Lasche (45) in Eingriff bringbaren Werkzeuges zwischen den beiden Federarmteilen (35,40) in zusammengepresstem Zustand ein erforderlicher Abstand gewährleistet ist.

5. Vorrichtung nach Anspruch 1 bis 4, dadurch gekennzeichnet, dass das Klemmelement (30) im ersten Federarmteil (35) mit einer in zusammengepressten Zustand der beiden Federarmteile (35,40) die abgebogene Lasche (45) aufnehmenden Ausnehmung (33') versehen ist.

6. Vorrichtung nach Anspruch 5, dadurch gekennzeichnet, dass das Klemmelement (30) im ersten Federarmteil (35) eine erste Ausnehmung (33) sowie die daran anschliessende zweite Ausnehmung (33') und das zweite Federarmteil (40) eine mit der ersten Ausnehmung (33) korrespondierende Ausnehmung (41) aufweist.

7. Vorrichtung nach Anspruch 1, dadurch gekennzeichnet, dass die Längs- und Querträger (11,11'12,12' und 14,14';15, 15') sowie die Vertikalstützen (13,13';16,16') aus einem im Profilquerschnitt kastenförmig ausgebildeten Profilkörper (1) bestehen, welcher auf der der Wand- oder Bodenplatte (20 bis 25) zugewandten Seite je eine entsprechend ausgebildete und je mit einem Anlageteil (28,29) für die Wand- oder Bodenplatte (20 bis 25) versehene Wand (4,6) aufweist, die auf der dem Anlageteil (28,29) gegenüberliegenden Seite mit einem nasenartigen Anschlag (7,8) zum Arretieren des Klemmelements (30) versehen ist.

8. Vorrichtung nach Anspruch 1 und 7, dadurch gekennzeichnet, dass die der Wand- oder Bodenplatte (20 bis 25) zugewandte Seite der Profilkörperwand (4,6) relativ zu der gegenüberliegenden Profilkörperwand (5,3) jeweils mit einer in Richtung des Anschlags (7,8) orientierten Neigung versehen ist, derart, dass zwischen der Stirnseite der Wand- oder Bodenplatte (20 bis 25) und der korrespondierenden Profilkörperwand (4,6) ein im wesentlichen keilförmiger Spalt (17) zum Einsetzen des Klemmelements (30) gebildet ist.

9. Vorrichtung nach Anspruch 1 und 2, dadurch gekennzeichnet, dass an mindestens einer Seite, vorzugsweise an zwei gegenüberliegenden Seiten der Wand- oder Bodenplatten (20 bis 25) mindestens ein Klemmelement (30) angeordnet und mit dem ersten Federarmteil (35) an der Wand- oder Bodenplatte befestigt ist.

10. Vorrichtung nach Anspruch 1 und 2, dadurch gekennzeichnet, dass die einzelne Wand- oder Bodenplatte (20 bis 25) an mindestens einer Seite, vorzugsweise an zwei gegenüberliegenden Seiten jeweils durch zwei im Abstand zueinander angeordnete Klemmelemente (30) mit dem zugeordneten Längs- oder Querträgern beziehungsweise der zugeordneten Vertikalstütze des Grundrahmens (10) verspannt ist.

FIG. 1

FIG. 4

FIG. 2

FIG. 3

EP 0 402 562 A1

FIG. 8

FIG. 7

FIG. 6

FIG. 9

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 603 341 (SOCIETE EUROPEENNE DE PROPULSION) <br> * Seite 4, Zeile 10 - Seite 7, Zeile 17; Figuren 2A,2B,2C,3A,3B,3C * <br> --- | 1-3,7,8 | F 16 B 5/06 <br> F 16 B 12/20 <br> F 16 B 2/24 |
| X | US-A-3 973 295 (W.R. JANKE) <br> * Spalte 3, Zeile 27 - Spalte 6, Zeile 39; Figuren 1-5 * | 1-3,9 | |
| A | <br> --- | 10 | |
| A | FR-A-1 455 295 (TINNERMAN PRODUCTS INC.) <br> * Seite 5, rechte Spalte, Absatz 3 - Seite 6, linke Spalte, Absatz 2; Figuren 12-15 * <br> --- | 2,5,6 | |
| A | GB-A- 780 844 (L.J. FOWLER) <br> ----- | | |

**RECHERCHIERTE SACHGEBIETE (Int. Cl.5)**

F 16 B
F 24 F
A 47 B

Der vorliegende Recherchenbericht wurde für alle Patentansprüche erstellt

| Recherchenort | Abschlußdatum der Recherche | Prüfer |
|---|---|---|
| DEN HAAG | 17-09-1990 | ARESO Y SALINAS J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................

& : Mitglied der gleichen Patentfamilie, übereinstimmendes Dokument